(19) Europäisches Patentamt
European Patent Office
Office européen des brevets

(11) Veröffentlichungsnummer : **0 061 088**
**B1**

(12) # EUROPÄISCHE PATENTSCHRIFT

(45) Veröffentlichungstag der Patentschrift : **13.06.84**

(51) Int. Cl.³ : **G 03 G 5/06**, G 03 G 5/14, C 09 B 5/62, C 09 B 56/00

(21) Anmeldenummer : **82101999.9**

(22) Anmeldetag : **12.03.82**

(54) **Elektrophotographisches Aufzeichnungsmaterial.**

(30) Priorität : **20.03.81 DE 3110954**

(43) Veröffentlichungstag der Anmeldung : **29.09.82 Patentblatt 82/39**

(45) Bekanntmachung des Hinweises auf die Patenterteilung : **13.06.84 Patentblatt 84/24**

(84) Benannte Vertragsstaaten : **BE DE FR GB IT NL**

(56) Entgegenhaltungen :
**EP-A- 0 040 402**
**CH-A- 523 943**
**DE-A- 2 237 539**
**FR-A- 2 361 749**
**FR-A- 2 379 841**
**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Graser, Fritz, Dr.**
**Blieskasteler Strasse**
**D-6700 Ludwigshafen (DE)**
Erfinder : **Hoffmann, Gerhard, Dr.**
**Pappelstrasse 22**
**D-6701 Otterstadt (DE)**
Erfinder : **Leyrer, Reinhold J., Dr.**
**Menzelstrasse 4**
**D-6700 Ludwigshafen (DE)**
Erfinder : **Neumann, Peter, Dr.**
**Franz-Schubert-Strasse 1**
**D-6908 Wiesloch (DE)**
Erfinder : **Patsch, Manfred, Dr.**
**Fritz-Wendel-Strasse 4**
**D-6706 Wachenheim (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 061 088 B1

Jouve, 18, rue St-Denis, 75001 Paris, France

**Beschreibung**

Die Erfindung betrifft ein elektrophotographisches Aufzeichnungsmaterial bestehend aus einem elektrisch leitfähigen Trägermaterial und einer photohalbleitenden Doppelschicht aus organischen Materialien sowie ein Verfahren zur Herstellung dieser elektrophotographischen Aufzeichnungsmaterialien und ihre Verwendung für reprographische Zwecke.

Elektrophotographische Aufzeichnungsmaterialien bestehen entweder aus einer homogenen Schicht eines Photohalbleiters auf einem elektrisch leitfähigen Trägermaterial oder aus mehreren, übereinander angeordneten Schichten auf einem Träger. Aufzeichnungsmaterialien mit dieser mehrschichtigen sogenannten Kompositstruktur sind aufgebaut aus einem leitfähigen Träger, einer ersten Schicht, die Ladungsträger erzeugende Verbindungen enthält und einer darüber angeordneten zweiten Schicht mit Ladungsträger transportierenden Stoffen. Solche Kompositstrukturen sind u. a. in der DE-A-22 20 408 beschrieben. In der DE-A-22 37 539 werden entsprechende elektrophotographische Elemente offenbart, welche in der ersten Schicht als Ladungsträger erzeugende Verbindungen, Farbstoffe der allgemeinen Formel I enthalten

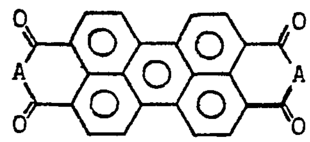

(I)

wobei A sowohl Sauerstoff als auch N-R mit R gleich Wasserstoffatom, Alkyl- oder Alkylphenylgruppen bedeuten kann.

Diese Verbindungen werden bevorzugt auf den leitfähigen Träger im Hochvakuum bei Temperaturen über 300 °C aufgedampft. Es handelt sich um rote Pigmente, wobei ein entsprechendes Empfindlichkeitsspektrum angegeben ist, das in der Figur 1 wiedergegeben ist. Hieraus ist ersichtlich, daß die Photoempfindlichkeit der im Hochvakuum aufgedampften roten Perylentetracarbonsäurederivate nur im Bereich von ca. 450 bis 600 nm gewährleistet ist. Es sind jedoch in der Elektrophotographie panchromatische Schichten, d. h. solche, die über den gesamten sichtbaren Spektralbereich nahezu gleichmäßig empfindlich sind, erwünscht, um farbige Vorlagen in einer guten Grauabstufung kopieren zu können.

Auf der Basis von Perylentetracarbonsäure sind auch schwarze Farbstoffe, welche eine Photoleitfähigkeit besitzen, beschrieben (DE-A-26 36 421). Ebenso werden diese Farbstoffe neben anderen gemäß der DE-A-28 04 669 für ein photoelektrophoretisches Verfahren als geeignet offenbart. Weitere Perylentetracarbonsäurederivate werden in den DE-A-28 41 925, 28 41 948 und 28 42 022 beschrieben.

Aufgabe der vorliegenden Erfindung war es, elektrophotographische Aufzeichnungsmaterialien mit einer Kompositstruktur bereitzustellen, die ein panchromatisches Absorptionsverhalten aufweisen, d. h. farbige Vorlagen gut reproduzieren können und das gesamte Licht von Kopierlampen ausnützen, und die mittels einer einfachen Applikationstechnik hergestellt werden können und außerdem verbesserte elektrophotographische Eigenschaften besitzen.

Die Lösung der Aufgabe geht von einem elektrophotographischen Aufzeichnungsmaterial aus, das sich

a) aus einem elektrisch leitfähigen Trägermaterial,

b) einer ersten Schicht, die Ladungsträger erzeugende Farbstoffe bestimmter Art enthält, mit einer Dicke von 0,01 bis 5 µm und

c) einer zweiten, für das aktinische Licht weitgehend transparenten Schicht aus isolierenden organischen Materialien mit mindestens einer, im Licht Ladungen transportierenden Verbindung zusammensetzt.

Es wurde gefunden, daß bestimmte Perylen-3,4,9,10-tetracarbonsäurederivate, die durch ihre Kristalleigenschaften schwarze Pigmente darstellen oder durch spezielle Substitution am Perylengerüst dunkel gefärbte Farbstoffe darstellen nach einem Auftrag aus einer Dispersion mittels einer Rakel gute elektrophotographische Aufzeichnungsmaterialien mit einem panchromatischen Absorptionsverhalten ergeben.

Die elektrophotographischen Aufzeichnungsmaterialien sind erfindungsgemäß dadurch gekennzeichnet, daß sie Perylentetracarbonsäurederivate der Formel II enthalten

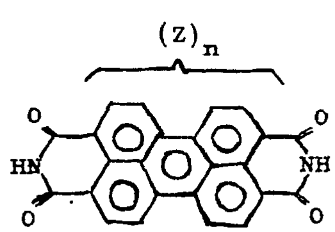

(II)

in der

n = 1 bis 6 und

Z = p-Phenylazoanilino, Phenylthio oder Anilino

bedeuten.

Die entsprechenden Farbstoffe werden in bekannter Weise durch Umsetzung von entsprechend chloriertem Perylen-3,4,9,10-tetracarbonsäurediimid in Dimethylformamid mit Anilin, Thiophenol oder Aminoazobenzol hergestellt.

Zur Herstellung der erfindungsgemäßen elektrophotographischen Aufzeichnungsmaterialien werden für die erste, Ladungsträger erzeugende Schicht die erfindungsgemäß geeigneten Farbstoffe in Form einer Lösung in einem organischen leicht verdampfbaren Lösungsmittel allein oder in Kombination mit einem hierfür üblichen Bindemittel, das gegebenenfalls Sperrschichteigenschaften aufweisen kann, auf das leitfähige Trägermaterial in einer Trockenschichtdicke von 0,01 bis 5, vorzugsweise 0,05 bis 1,4 µm aufgebracht. Das Verhältnis von Farbstoff zu Bindemittel beträgt 1 : 0 bis 1 : 3, vorzugsweise 1 : 0,2 bis 1 : 0,8. Zwischen dem Träger und der ersten Schicht kann eine Haftschicht in einer Dicke von etwa 0,05 bis 5 µm, vorzugsweise 0,1 bis 0,8 µm angeordnet werden.

Über der ersten Schicht wird die transparente zweite Schicht ebenfalls durch Gießen aus einer Lösung angeordnet. Die Dicke der zweiten Schicht liegt zwischen 1 und 40, vorzugsweise zwischen 5 und 25 µm. Sie setzt sich aus 30 bis 60 Gew.-% einer oder mehrerer ladungsträgertransportierenden Verbindungen, 65 bis 35 Gew.-% an einem oder mehreren hierfür üblichen Bindemitteln, 0,1 bis 4 Gew.-% an Zusätzen, die die mechanischen Eigenschaften verbessern und gegebenenfalls bis zu 5 Gew.-% an sensibilisierenden oder aktivierenden Verbindungen zusammen. Der Gießprozeß erfolgt aus einem niedrigsiedenden Lösungsmittel.

Zwischen der ersten und der zweiten Schicht ist gegebenenfalls eine Sperrschicht von etwa 0,05 bis 1,5 µm, vorzugsweise 0,1 bis 0,5 µm angeordnet, während es je nach vorgesehener Verwendung des elektrophotographischen Aufzeichnungsmaterials angemessen sein kann, eine als Deck- und Schutzschicht wirkende inaktive Schicht auf die Ladungsträger transportierende Schicht aufzubringen.

Als elektrisch leitfähiges Trägermaterial sind Aluminiumfolien, Aluminiumbleche, Nickelbleche, oder mit Aluminium, Zinn, Blei, Wismut oder ähnlichen Metallen bedampfte Kunststoffolien, vorzugsweise Polyesterfolien geeignet. Die Auswahl wird durch das Einsatzgebiet des elektrographischen Elements bestimmt.

Die Sperrschichten zwischen dem leitfähigen Trägermaterial und der ersten Schicht oder zwischen derselben und der zweiten Schicht bestehen üblicherweise aus Metalloxidschichten, z. B. Aluminiumoxidschichten, Polymeren, wie z. B. Polyamid, Polyvinylalkohol, Polyacrylate, Polystyrol oder ähnliche Systeme. Gegebenenfalls kann aber auch das Bindemittel der ersten Schicht gleichzeitig als Sperrschichtmaterial dienen.

Zur Herstellung der Ladungsträger erzeugenden Schicht der erfindungsgemäßen elektrophotographischen Aufzeichnungsmaterialien sind Polyacrylate, Polymethacrylate, Polyester, Polyphthalsäureester, Polyvinylchloride, Styrol-Maleinsäure-Copolymerisate, Epoxide und andere allgemein übliche Harze als Bindemittel für die Aufnahme der Farbstoffe gemäß der Erfindung geeignet.

Für die zweite, die Ladungsträger transportierende Schicht eignen sich als Bindemittel besonders Polyvinylchlorid, Polyesterharze, Polyacetalharze, Polycarbonate, Polystyrol, Polyurethane, d. h. solche Bindemittel, welche speziell elektrische Eigenschaften zeigen und dem Fachmann hierfür bekannt sind. So bieten sich auch Silikonharze, Polyvinylacetat, Chlorkautschuk, Celluloseester, Äthylcellulose und ähnliche an. Als Ladungsträger transportierende Verbindungen, welche in dieser Schicht enthalten sind, eignen sich solche die Transparenz für das sichtbare Licht nicht beeinträchtigende Verbindungen, wie

a) niedermolekulare Verbindungen, insbesondere heterocyclische Verbindungen, wie Pyrazolinderivate, Ozazole, Oxadiazole, Phenylhydrazone, Imidazole, Triphenylaminderivate, Carbazolderivate, Pyrenderivate und weitere, kondensierte Aromaten sowie

b) polymere Materialien, wie Polyvinylpyrene, Poly(N-vinylcarbazol), Copolymerisate aus Carbazol und Styrol, bzw. Vinylacetat und/oder Vinylchlorid.

Vom polymeren Typ ist besonders Poly(N-vinylcarbazol) geeignet.

Die erfindungsgemäßen elektrophotographischen Aufzeichnungsmaterialien können noch weitere Bestandteile zur Verbesserung ihrer mechanischen Eigenschaften enthalten. So können Netzmittel, wie die Silikonöle die Oberflächenqualität verbessern. Weiter können zusätzlich Sensibilisatoren oder Aktivatoren der oberen zweiten Schicht einverleibt werden. Als Sensibilisatoren, die in disperser Form gelöst werden können, sind z. B. Triphenylmethanfarbstoffe, Xanthonfarbstoffe, lösliche Perylenderivate, wie Perylentetracarbonsäureester und eine Reihe weiterer Verbindungen bekannt. Als Aktivatoren dienen Verbindungen mit hoher Elektronenaffinität, z. B. Nitroverbindungen, wie 2,4,7-Trinitrofluorenon-9.

Das erfindungsgemäße elektrophotographische Aufzeichnungsmaterial enthält hochlichtempfindliche photohalbleitende Doppelschichten, die eine hohe mechanische Stabilität aufweisen und zum Beispiel auf einer zylindrischen Trommel angeordnet oder als endloses Band umlaufen können, ohne däß Verschleißerscheinungen auftreten. Sie sind demgemäß sehr geeignet zur Verwendung für reprographische Zwecke z. B. als Kopierschichten, elektrophotographische Offsetdruckplatten.

Die Erfindung sei anhand folgender Beispiele näher erläutert.

Beispiele 1 und 2

Es werden je 5 g der Verbindungen 1 und 2

Verbindung 1

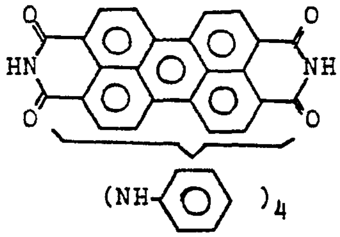

Verbindung 2

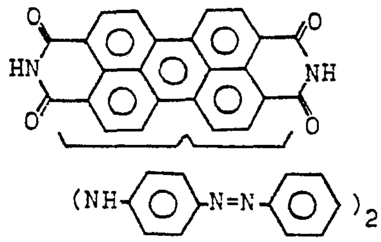

mit jeweils 3 g eines Copolymerisats aus Vinylchlorid, Acrylsäure und einem Maleinsäurediester und 25 g Tetrahydrofuran vermischt und für 12 Stunden auf einem Walzenstuhl gerollt. Die Mahlzeit muß eingehalten werden, da die Pigmente bei einer zu feinen Mahlung ihre Farbe von schwarz nach rot ändern können. Danach werden 75 g Tetrahydrofuran und 25 g Toluol zugesetzt. Das Gemisch wird eine Stunde lang auf dem Walzenstuhl homogenisiert.

Diese Dispersion wird dann mit einer Rakel auf ein unbehandeltes Aluminiumträgerblech von 175 µm Stärke aufgetragen. Der Gießspalt beträgt 60 µm. Die Rakel wird mit einer Geschwindigkeit von 260 mm/min abgezogen. Nach dem Ablüften und Trocknen für 30 Minuten bei 90 °C verbleibt eine Trockenschichtdicke von 0,75 bis 0,8 µm.

Auf diese erste, deckende Schicht wird jeweils eine Lösung aus 47,75 g Poly(N-vinylcarbazol), 5,2 g Phthalsäuredihexylester und 5,75 g eines Polycarbonats mit einer Schmelztemperatur von 220 bis 230 °C in einem Lösungsmittelgemisch aus 287,5 g Tetrahydrofuran und 74,25 g Toluol aufgetragen. Der Gießspalt beträgt jeweils 140 µm ; die Rakel wird mit 260 mm/min abgezogen. Nach der Ablüftung und der Trocknung für 30 Minuten bei 90 °C verbleibt eine Trockenschicht von 8 bis 8,5 µm Dicke.

Das so bereitete elektrophotographische Element wird dann mit einer Hochspannung von − 7,40 kV an einem Coronadraht in einem Abstand von 10 mm über der Schichtoberfläche beladen. Nach 20 Sekunden Beladungszeit wird das maximal erreichte Oberflächenpotential in Volt ermittelt. Diese Oberflächenpotentiale werden auf das Oberflächenpotential einer völlig analog hergestellten Platte, gleich 100 %, bezogen welche gemäß der DE-A-22 37 539 N,N'-Dimethylperylen-3,4,9,10-tetracarbonsäurediimid enthält. Nach weiteren 20 Sekunden im Dunkeln wird der prozentuale Potentialabfall, bezogen auf das maximale Potential bestimmt. Dann wird das elektrophotographische Element mit dem Licht einer Xenonlampe von 150 Watt Leistungsaufnahme bestrahlt. Der lichtinduzierte prozentuale Potentialabfall, bezogen auf das Potential nach dem Dunkelabfall, wird gemessen. Danach wird der gleiche Vorgang mit dem gefilterten Licht (Filter OG 590 der Fa. Spindler + Hoyer, Göttingen) der Xenonlampe durchgeführt.

Die Meßergebnisse sind in der Tabelle angegeben.

Vergleichsversuch

Es wird wie bei den erfindungsgemäßen Beispielen beschrieben verfahren, jedoch wird als Farbstoff N,N'-Dimethylperylimid,

Verbindung 3

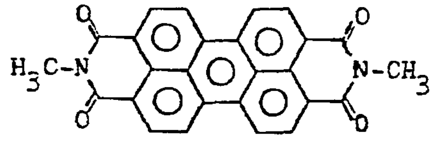

eingesetzt.

Die Meßergebnisse sind in der Tabelle angegeben.

Tabelle

| Verbindung | rel. Oberfl.-pot. in % | Dunkelabfall in % | Lichtabfall in % (ungefiltert) | (gefiltert) |
|---|---|---|---|---|
| 1 | 91 | 35 | 74 | 32 |
| 2 | 76 | 31 | 74 | 26 |
| 3 | 100 | 20 | 77 | 8 |

**Ansprüche**

1. Elektrophotographisches Aufzeichnungsmaterial, im wesentlichen bestehend aus einem elektrisch leitfähigen Trägermaterial, einer ersten Ladungsträger erzeugende Farbstoffe enthaltenden Schicht, wobei die Farbstoffe Perylen-3,4,9,10-tetracarbonsäurederivate darstellen, und einer zweiten, für das aktinische Licht weitgehend transparenten Schicht aus isolierenden organischen Materialien mit mindestens einer, im Licht Ladungen transportierenden Verbindung, dadurch gekennzeichnet, daß die in der ersten Schicht enthaltenen Ladungsträger erzeugenden Farbstoffe dunkelgefärbt sind, ein weitgehend panchromatisches Absorptionsverhalten aufweisen und der Formel II :

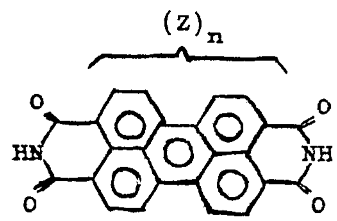

(II)

entsprechen, in der

n = 1 bis 6 und

Z = p-Phenylazoanilino, Phenylthio oder Anilino

bedeuten.

2. Elektrophotographisches Aufzeichnungsmaterial gemäß Anspruch 1, dadurch gekennzeichnet, daß in der zweiten, für das aktinische Licht weitgehend transparenten Schicht die im Licht Ladungen transportierende Verbindung Poly-(N-vinylcarbazol) ist.

3. Verfahren zur Herstellung von elektrophotographischen Aufzeichnungsmaterialien gemäß Anspruch 1, dadurch gekennzeichnet, daß auf ein elektrisch leitfähiges Trägermaterial zuerst eine Ladungsträger erzeugende, Farbstoffe der Formel II enthaltende Dispersion in einer solchen Dicke aufgetragen wird, daß die nach dem Trocknen resultierende Feststoffdicke 0,005 bis 5 μm beträgt und dann, gegebenenfalls nach Aufbringen einer an sich üblichen Sperrschicht, eine Lösung eines isolierenden organischen Materials zusammen mit einer im Licht Ladungen transportierenden Verbindung zur Ausbildung einer zweiten Schicht in einer Feststoffdicke von 2 bis 40 μm aufgebracht wird.

4. Verwendung der elektrophotographischen Aufzeichnungsmaterialien gemäß Anspruch 1 oder 2 für reprographische Zwecke.

**Claims**

1. An electrophotographic recording medium which consists essentially of an electrically conductive base, a first layer containing charge carrier-producing dyes, the dyes being perylene-3,4,9,10-tetracarboxylic acids, and a second layer which is substantially transparent to actinic light and is composed of an insulating organic material containing at least one compound which is charge carrier-transporting when exposed to light, wherein the charge carrier-producing dye contained in the first layer is dark in color, possesses substantially panchromatic absorption characteristics, and is of the formula II

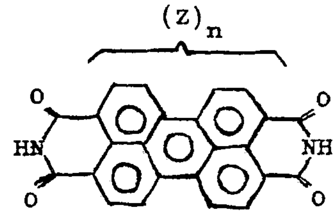

(II)

where

n is 1-6, and

Z is p-phenylazoanilino, phenylthio or anilino.

2. An electrophotographic recording medium as claimed in claim 1, wherein in the second layer, which is substantially transparent to actinic light, the compound which is charge carrier-transporting when exposed to light is poly-(N-vinylcarbazole).

3. A process for the production of an elektrophotographic recording medium as claimed in claim 1, wherein first of all a dispersion containing charge carrier-producing dyes of the formula II is applied to an electrically conductive base in such a thickness that, after drying, the thickness of the resulting layer is from 0.005 to 5 µm, a conventional barrier layer is then applied, if desired, and thereafter a solution of an insulating organic material, together with a compound which is charge carrier-transporting when exposed to light, is applied to form a second layer which is from 2 to 40 µm thick when dry.

4. The use of an electrophotographic recording material as claimed in claim 1 or 2 for reprographic purposes.

**Revendications**

1. Matériau d'enregistrement électrophotographique, constitué essentiellement d'un matériau support conducteur de l'électricité, d'une première couche contenant des colorants, générant un porteur de charge, les colorants représentant des dérivés d'acide perylen-3,4,9,10-tétracarboxylique, et d'une seconde couche, très transparente pour la lumière actinique, faite de matériaux organiques isolants avec au moins un composé transportant des charges, à la lumière, caractérisé par le fait que les colorants, générant un porteur de charge et contenus dans la première couche, sont de teinte sombre, présentent un comportement d'absorption fortement panchromatique et correspondent à la formule II

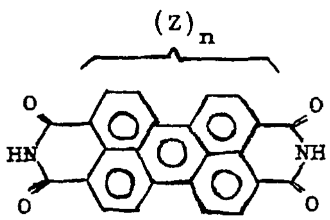

(II)

dans laquelle

n = 1 à 6 et

Z représente p-phénylazoanilino, phénylthio ou anilino.

2. Matériau d'enregistrement électrophotographique, selon la revendication 1, caractérisé par le fait que, dans la seconde couche, très transparente pour la lumière actinique, le composé transportant des charges, à la lumière, est du poly-(N-vinylcarbazol).

3. Procédé de préparation de matériau d'enregistrement électrophotographique, selon la revendication 1, caractérisé par le fait que, sur un matériau support conducteur de l'électricité, on applique d'abord une dispersion contenant des colorants de formule II, générant un porteur de charge, en une épaisseur telle que l'épaisseur de matière solide résultant du séchage soit de 0,005 à 5 µm, puis, éventuellement après application d'une couche de raréfaction, connue en soi, on applique une solution d'un matériau organique isolant, avec un composé transportant des charges, à la lumière, pour former une seconde couche d'une épaisseur de solide de 2 à 40 µm.

4. Utilisation du matériau d'enregistrement électrophotographique selon la revendication 1 ou 2, pour la reprographie.

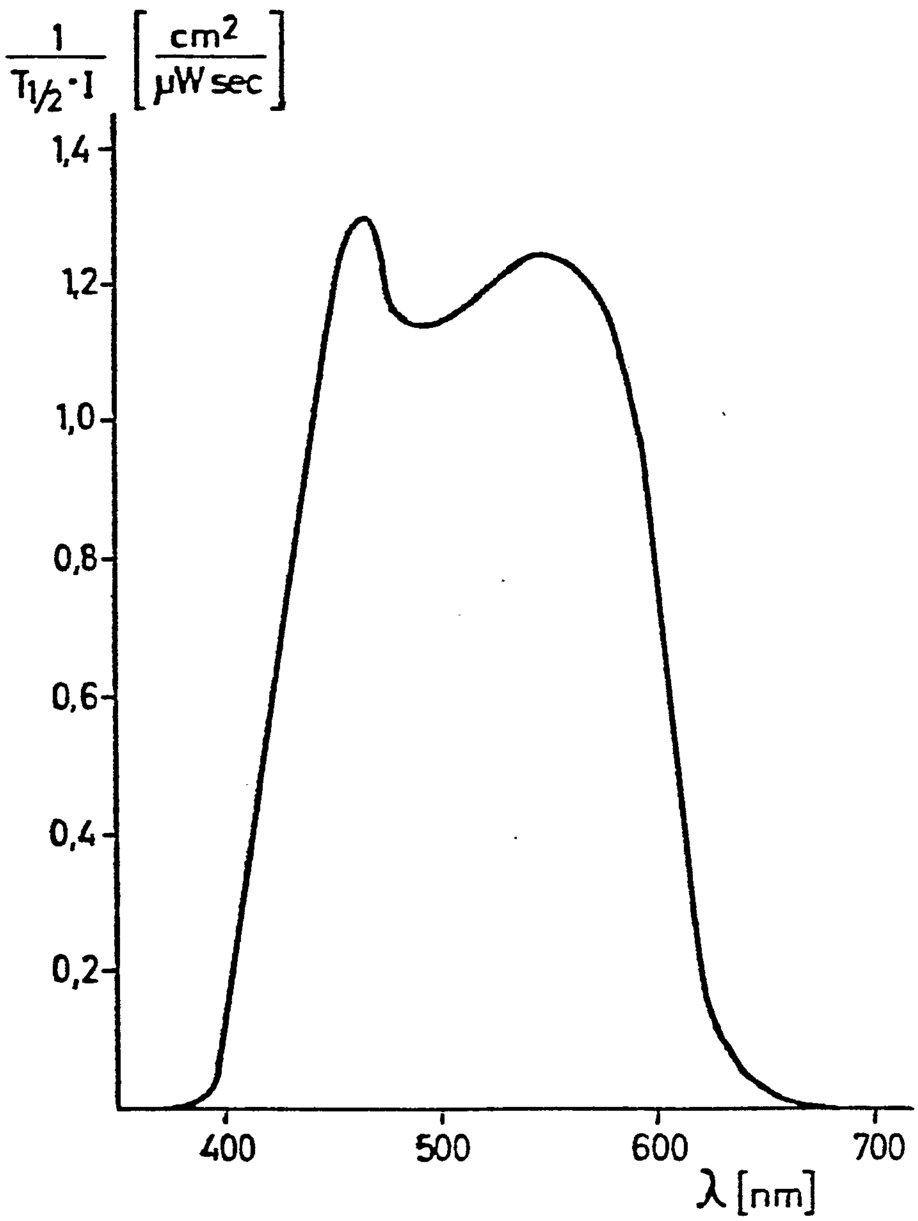

1
$T_{1/2} \cdot I$
cm²
µW sec
1,4
1,2
1,0
0,8
0,6
0,4
0,2
400
500
600
700
λ [nm]